# EUROPÄISCHE PATENTSCHRIFT

(11) **EP 0 472 887 B1**
(45) Veröffentlichungstag und Bekanntmachung des Hinweises auf die Patenterteilung: **17.08.1994**
(21) Anmeldenummer: 91112080.6
(22) Anmeldetag: 19.07.1991
(51) Int. Cl.: F16K 11/065, F15B 13/042

(54) **Ventil**
Valve
Soupape

(30) Priorität: 31.08.1990 DE 4027610
(43) Veröffentlichungstag der Anmeldung: 04.03.1992
(73) Patentinhaber: Festo KG, D-73734 Esslingen (DE)
(72) Erfinder: de Fries, Jan Richard, CH-8304 Wallisellen (CH)
(74) Vertreter: Abel, Martin, Dipl.-Ing.

(56) Entgegenhaltungen:
- CH-A- 504 639
- DE-U- 8 704 118
- GB-A- 2 151 753
- US-A- 3 575 377

## Beschreibung

Die Erfindung betrifft ein Ventil mit einem Ventilgehäuse, das eine Schieberaufnahme enthält, die seitlich auf einander entgegengesetzten Seiten Mündungen mindestens einer Zuströmöffnung und einer Abströmöffnung für ein insbesondere pneumatisches Fluid aufweist, mit einem in der Schieberaufnahme zwischen mindestens zwei Schaltstellungen hin und her verstellbaren Ventilschieber, der mindestens eine ihn quer zu seiner Verstellrichtung durchdringende und an entgegengesetzten Schieberflächen zu den Mündungsseiten der Schieberaufnahme hin offene Schieber-Durchbrechung für die Querdurchströmung des Fluids aufweist, wobei im Bereich der beiden Schieberflächen neben mindestens einer Schieber-Durchbrechung angeordnete ventilschieberseitige Gleitflächen durch ein fluidisches Andrückmittel gegen ventilgehäuseseitige Abstützflächen andrückbar sind.

Ein derartiges Ventil, das auch als Schieberventil bezeichnet werden kann, geht aus der GB-A-2 151 753 (Figur 7) hervor. Es hat einen blockartigen Schieberkörper, der in einer Schieberaufnahme läuft, in die er eingepaßt ist. Zur Abdichtung ist in eine Schieber-Durchbrechung ein Kolben verschiebbar eingesetzt, der durch eine Feder und einen fluidischen Hilfsdruck vorgespannt ist.

Das bekannte Ventil baut relativ breit. Desweiteren erfordert die Einpassung des Schieberkörpers in die Schieberaufnahme einen nicht unbeträchtlichen Fertigungsaufwand. Letztlich können Abnutzungen im Bereich der Kontaktflächen zwischen Schieberkörper und Ventilgehäuse im Laufe der Zeit zu Funktionstörungen führen.

Es ist daher die Aufgabe der vorliegenden Erfindung, ein Ventil der eingangs genannten Art zu schaffen, dessen Ventilschieber in schmaler Bauweise ausgeführt werden kann und der auf lange Sicht gut abgedichtet und geführt in der Schieberaufnahme angeordnet ist.

Diese Aufgabe wird dadurch gelöst, daß der Ventilschieber zwei plattenförmige, quer zur Verstellrichtung des Ventilschiebers mit veränderbarem Abstand nebeneinander angeordnete Schieberelemente umfaßt, an denen jeweils eine der beiden mündungsseitigen Schieberflächen und zugleich die an die Abstützflächen andrückbaren ventilschieberseiten Gleitflächen vorgesehen sind, und daß zwischen den beiden plattenförmigen Schieberelementen eine elastische Dichtungsanordnung vorgesehen ist, die im Zwischenbereich der Schieberelemente einen mit dem fluidischen Andrückmittel beaufschlagbaren Fluidraum begrenzt und unabhängig vom momentanen Abstand der beiden Schieberelemente gleichzeitig mit beiden Schieberelementen in Dichtkontakt steht.

Auf diese Weise liegt ein sehr kompaktes Ventil vor, das dem durchströmenden Medium einen sehr geringen Strömungswiderstand entgegensetzt. Der Ventilschieber kann mit relativ großen Schieber-Durchbrechungen ausgestattet werden, was den Durchtrittsquerschnitten zugutekommt, ohne daß die Außenabmaße des Ventils vergrößert werden müßten.

Von besonderem Vorteil ist, daß die beiden den Mündungen in der Schieberaufnahme zugewandten Schieberflächen sowie diesen jeweils zugewandte gehäuseseitige Abstützflächen durch ein fluidisches Andrückmittel insbesondere selbstnachstellend aneinander andrückbar sind. Dies bewirkt eine Stabilisierung der Schieberposition innerhalb des Ventilgehäuses und gewährleistet dauernd optimalen Dichtkontakt zwischem dem Ventilschieber und dem Ventilgehäuse. Bei exakter Oberflächenbearbeitung der zur Abdichtung dienenden Schieber- und Gehäuseflächen, z.B. durch Läppen, kann auf diese Weise sogar auf zusätzliche Kunststoffdichtungen verzichtet werden. Das fluidverursachte Gegeneinanderdrücken der Schieberflächen gegen die Gehäuseflächen führt zu einem Aneinanderschmiegen der Kontaktflächen.

Vorteilhafte Weiterbildungen der Erfindung sind in den Unteransprüchen aufgeführt.

Die den Fluidraum begrenzende Dichtungsanordnung kann beispielsweise von Dichtelementen oder Dichtmasken gebildet sein, die gleichzeitig eine Festlegung der relativen Axiallage zwischen den beiden Schieberelementen bewirken können.

Das als Andrückmittel dienende Fluid kann separat zugeführt werden, wobei es insbesondere unabhängig von der jeweiligen Schieberstellung im Fluidraum anliegt. Bevorzugt wird allerdings eine Ausführungsform, bei der das fluidische Andrückmittel vom Arbeitsmedium des Ventils abgezweigt wird, d.h. von dem in den Zu- und/oder Abströmöffnungen strömenden Fluid. Dies hat den Vorteil, daß die Andrückkraft bzw. der Anpressdruck in Abhängigkeit vom Druck des Arbeitsmediums selbsttätig variiert wird und eine gleichbleibend gute Zentrierung des Ventilschiebers in der Schieberaufnahme gewährleistet ist.

Zweckmäßigerweise erfolgt die Fluidzufuhr in den Fluidraum über eine Rückschlagventilanordnung, so daß der Ventilschieber auch in den Betätigungspausen wirksam abdichtet. Zugunsten der Betätigungsgeschwindigkeit beim Umschalten des Ventils kann allerdings eine Entsperreinrichtung vorgesehen werden, die beim Umschalten des Ventils eine kurzzeitige Belüftung des Fluidraumes zugunsten einer Reduzierung der erforderlichen Betätigungskraft hervorruft.

Weitere Vorteile der Erfindung werden in der nachfolgenden Beschreibung abgehandelt, in der einige Ausführungsbeispiele des erfindungsgemäßen Ventils anhand der beigefügten Zeichnung erläutert werden. Im einzelnen zeigen:
- Figur 1: eine erste Grundbauform des erfindungsgemäßen Ventils im Längsschnitt gemäß Schnittlinie I-I aus Figur 2,
- Figur 2: das in Figur 1 abgebildete Ventil im Längsschnitt im Bereich einer Gehäusetrennstelle entsprechend Schnittlinie II-II,
- Figur 3: ein vergrößertes Detail des Ventils gemäß des in Figur 1 angedeuteten Bereiches III,
- Figur 4: einen Querschnitt durch das Ventil entlang der abgestuften Schnittlinie IV-IV aus Figur 1,
- Figur 5: einen Querschnitt durch das Ventil im Bereich eines stirnseitigen Betätigungszylinders gemäß Schnittlinie V-V aus Figur 1
- Figur 6: in schematischer Darstellung die beiden stirnseitigen Endabschnitte einer weiteren, als Impulsventil ausgestalteten Ventilvariante mit besonders vorteilhaften Betätigungszylindern,
- Figur 7: in schematischer Darstellung eine Entsperreinrichtung für eine in den Ventilschieber integrierte Rückschlagventilanordnung,
- Figur 8 u. 9: in schematischer Darstellung und in einer Stirnansicht verschiedene Anordnungsmöglichkeiten der Ventilkanäle, wobei in Figur 8 die Arbeitsseite und die Zufuhr-/Abfuhrseite an entgegengesetzten Ventilseiten vorgesehen sind, während sie sich in Figur 9 an einer gemeinsamen Ventilseite befinden und
- Figur 10: eine weitere Ausführungsform des Ventils mit abgewandelter Art und Weise der Andrückung zwischen Schieber und Ventilgehäuse.

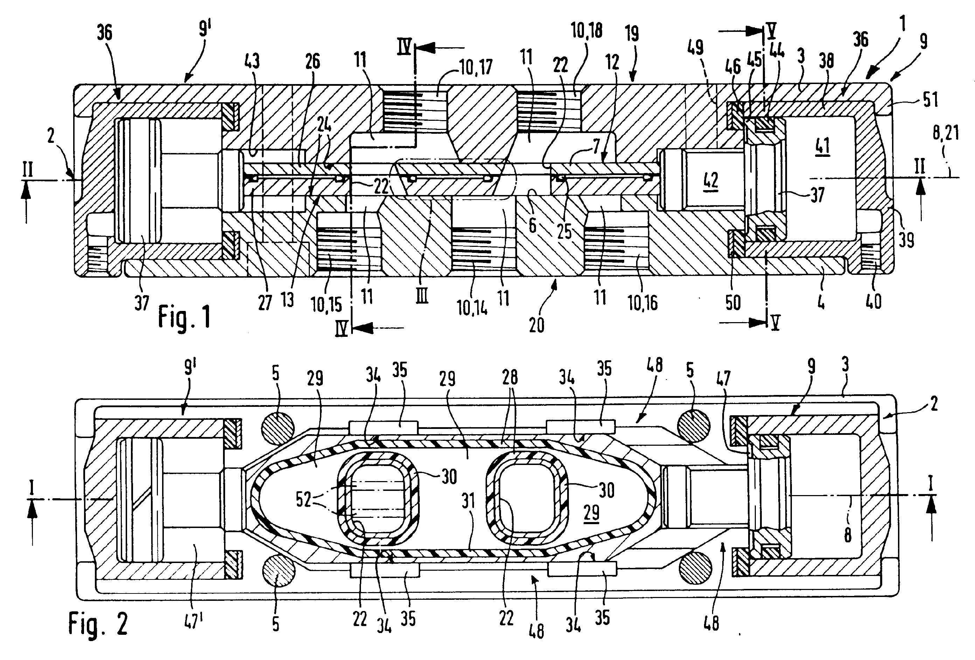

Das in den Figuren 1 bis 5 dargestellte Ventil besitzt ein längsgeteiltes Ventilgehäuse 1 mit zwei im Bereich einer Trennebene oder Trennstelle 2 zusammengesetzten Gehäuseteilen 3, 4. Letztere sind beim Ausführungsbeispiel von zwei Gehäusehälften gebildet und können, z.B. durch Laserschweißung unlösbar miteinander verbunden sein. Zweckmäßig ist allerdings ein demontierbarer Aufbau, der vorliegend durch vier die beiden Gehäuseteile 3, 4 in Querrichtung gegeneinander verspannende Klemmschrauben 5 realisiert wird.

Im Innern des Ventilgehäuses 1 befindet sich eine Schieberaufnahme 6. Auch sie wird von der Trennstelle 2 in zwei Aufnahmenhälften unterteilt, die von Gehäuseaussparungen gebildet sind. In der Schieberaufnahme 6 ist ein Ventilschieber 7 in Längsrichtung 8 des Ventils hin und her bewegbar aufgenommen. Stirnseitig schließt sich sich an die Schieberaufnahme 6 jeweils eine vorteilhafterweise im Ventilgehäuse 1 angeordnete Betätigungseinrichtung 9, 9′ an. Seitlich neben der Schieberaufnahme 6 verfügt das Ventilgehäuse 1 über mehrere Ventilkanäle 10, die Zuströmöffnungen und Abströmöffnungen für ein pneumatisches Fluid bilden und mit der Schieberaufnahme 6 über seitlich an dieser vorgesehene Mündungen 11 kommunizieren.

Der Ventilschieber 7 ist flach und platten- oder leistenförmig ausgestaltet, wobei seine Hauptmittelebene in der Ebene der Trennstelle 2 oder parallel versetzt hierzu verläuft. Auf diese Weise sind die beiden einander entgegengesetzten größerflächigen Schieberflächen 12, 13 jeweils einem der beiden Gehäuseteile 3, 4 zugewandt und liegen den Mündungen 11 der in diesen ausgebildeten Ventilkanälen 10 gegenüber.

Bei dem Ventil der Figuren 1 bis 5 handelt es sich um ein als 5-2-Wegeventil ausgestaltetes pneumatisch gesteuertes Schieberventil. Das in Figur 1 untere Gehäuseteil 4 verfügt hierbei über drei in Längsrichtung 8 aufeinanderfolgende Ventilkanäle 10, wobei zwei Entlüftungskanäle (R, S) 15, 16 einen Speisekanal (P) 14 flankieren. Der in Figur 1 obere Gehäuseteil 3 besitzt zwei in Längsrichtung 8 aufeinanderfolgende Ventilkanäle 10, die als Arbeitskanäle (A, B) 17, 18 dienen. Letztere öffnen sich zu einer Arbeitsseite 19 des Ventils an der der Trennstelle 2 entgegengesetzten Außenseite des zugeordneten Gehäuseteils 3 und erlauben das Anschließen von zu Verbrauchern weiterführenden Kanälen bzw. Leitungen (nicht dargestellt). Die zuvor erläuterten Ventilkanäle 10, 14, 15, 16 münden zur entgegengesetzten Ventilaußenseite aus, wo ebenfalls weiterführende Leitungen bzw. Kanäle anschließbar sind, die dem Speisekanal 14 das Arbeitsmedium zuführen und, wenn nicht eine direkte Entlüftung an die Umgebung beabsichtigt ist, die Abluft aus den Entlüftungskanälen entsorgen. Die entsprechende Ventilseite sei nachfolgend als Zufuhr-/Abfuhrseite 20 bezeichnet.

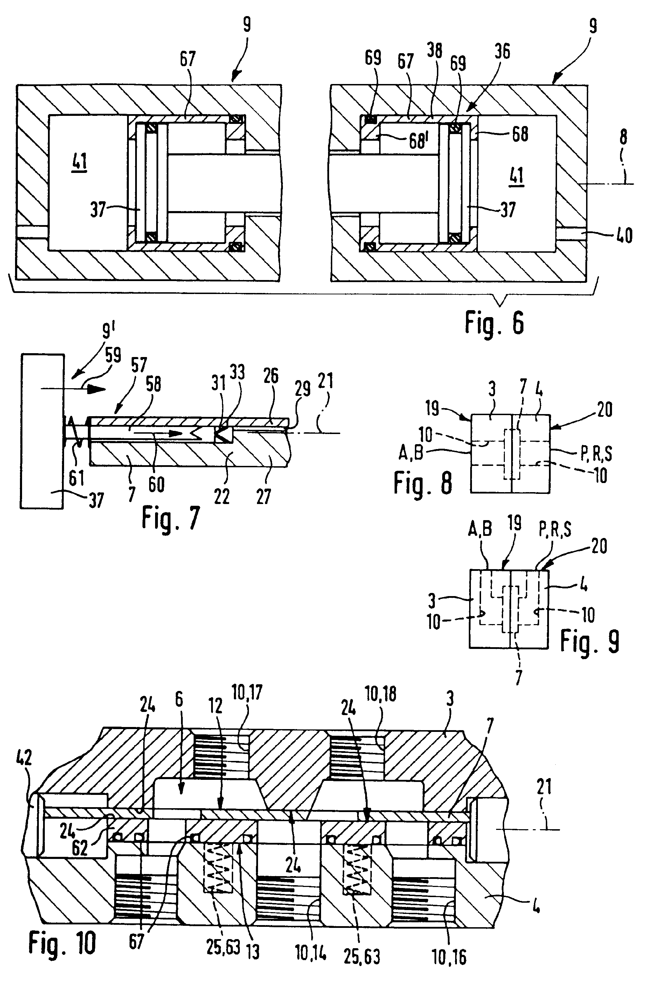

Der vorstehend erläuterte Aufbau mit an einander entgegengesetzten Ventilseiten vorgesehenen Arbeits- und Zufuhr-/Abluftseiten 19, 20 ist in Figur 8 nochmals schematisch illustiert. Mit Figur 9 wird allerdings deutlich, daß diese Seiten 19, 20 durchaus auch anderen der Ventilaußenseiten bedarfsgemäß zuordenbar sind. In Figur 9 befinden sich diese Seiten 19, 20 beispielsweise an einer gleichen Ventilaußenseite, wobei der Verlauf der Ventilkanäle 10 allerdings abgeknickt ist.

Bei dem Ventil der Figuren 1 bis 5 ist der Ventilschieber 7 zwischen zwei Schaltstellung bewegbar. Je nach Schaltstellung werden dabei einzelne der Ventilkanäle fluidisch miteinander verbunden, während gleichzeitig andere der Ventilkanäle voneinander getrennt werden. In der in Figur 1 abgebildeten ersten Schaltstellung ist über den Ventilschieber 7 eine fluidische Verbindung zwischen dem Speisekanal 14 und dem zweiten Arbeitskanal 18 hergestellt, wobei gleichzeitig der erste Arbeitskanal 17 mit dem ersten Entlüftungskanal 15 kommuniziert und der zweite Entlüftungskanal 16 verschlossen ist. In der nicht eingezeichneten zweiten Schaltstellung ist die Zuordnung umgekehrt, wobei der erste Arbeitskanal 17 mit Arbeitsmedium versorgt wird, während der zweite Arbeitskanal 18 über den zweiten Entlüftungskanal 16 belüftet ist. Auf diese Weise läßt sich zum Beispiel eine hin und her gehende Hubbewegung bei einem Arbeitszylinder hervorrufen.

Um die fluidische Verbindung zwischen einzelnen der Ventilkanäle 10 zu schaffen, besitzt der Ventilschieber 7 mehrere Steuerungsausnehmungen, die als ihn quer zu seiner in Längsrichtung 8 verlaufenden Verstellrichtung 21 vollständig durchdringende bzw. durchquerende Schieber-Durchbrechungen 22 ausgebildet sind. Diese öffnen sich jeweils in die Schieberflächen 12, 13 und damit hin zu den die Mündungen 11 aufweisenden Schieberaufnahmeabschnitten. Dies hat zur Folge, daß der Ventilschieber 7 von dem zwischen zwei Ventilkanälen 10 strömenden Fluid quer zu seiner Hauptmittelebene durchströmt wird. Verdeutlicht wird dies durch den in Figur 4 die Strömungsrichtung angebenden Strömungspfeil 23. Welcher der Ventilkanäle 10 jeweils eine Zuström- bzw. Abströmöffnung bildet, hängt von der Schaltstellung des Ventilschiebers und dem in den Kanälen anstehenden Druckniveau ab.

Es versteht sich, daß die Anzahl der vorhandenen Schieberdurchbrechungen 22 in Abhängigkeit vom jeweiligen Ventiltyp gewählt wird. Bei mehreren solche Schieberdurchbrechungen 22 erfolgt eine in Verstellrichtung 21 aufeinanderfolgende Anordnung derselben, das abgebildete Ventil verfügt über zwei Stück.

In Richtung einer der Schieberflächen 12, 13 gesehen, stellen sich die Schieber-Durchbrechungen 22 als im Ventilschieber 7 ausgenommene fensterartige ringsum umrandete Öffnungen dar. Sie bieten einen relativ großen Durchströmungsquerschnitt bezogen auf die Breitenabmessungen des Ventils und erlauben eine Durchströmung ohne großen Strömungswiderstand. Die Strömungsumlenkung im Laufe des Überganges zwischen zwei Ventilkanälen 10 ist minimal.

Die erfindungsgemäße Ventilschiebergestaltung wirkt sich vorteilhaft auch auf die Lebensdauer eventueller Dichtflächen oder Dichtelemente aus. Aus Figur 1 wird deutlich, daß sich die Schieberdurchbrechungen 22 und die im Bereich einer der Schieberflächen 12 zugeordneten Kanalmündungen 11 derart aufeinander abstimmen lassen, daß die Durchbrechungsränder zu keiner Zeit gehäuseseitige Kanten überlaufen. Im Bereich der Schieberfläche 12 sind hierzu sind die Mündungen 11 in Richtung zum Ventilschieber 7 sich erweiternd ausgebildet, während sich die Schieberdurchbrechungen 22 in Richtung zur Schieberfläche 12 verjüngen.

Um eine exakte Quereinpassung des Ventilschiebers 7 in die Schieberaufnahme 6 zu erhalten, um also eine präzise Führung des Schiebers ohne Klemmgefahr und bei optimaler Dichtwirkung zu erhalten, sind die beiden Schieberflächen 12, 13 und diesen jeweils zugewandte gehäuseseitige Abstützflächen 24 aneinander andrückbar. Die Abstützflächen 24 stellen dabei gleichzeitig Gleitflächen für die Verschiebeführung des Ventilschiebers 7 dar. Dabei sind die beiden Gehäuseteile 3 im Bereich der Trennstelle 2 fest aneinandergesetzt, und für die Andrückwirkung ist mindestens ein Andrückmittel 25 verwortlich, das die entsprechende Andrückkaft liefert. Die Andrückung ist vorzugsweise selbstnachstellend, derart, daß sich der Ventilschieber 7 selbsttätig an den Querschnitt der Schieberaufnahme 6 anpaßt, bzw. anschmiegt und auch sich im Betrieb eventuell einstellender Verschleiß automatisch ausgeglichen wird. Außerdem ermöglicht diese Ausgestaltung die Verwendung relativ harter Dichtpaarungen im Bereich zwischen dem Ventilschieber 7 und der Schieberaufnahme 6, es ist sogar eine völlig dichtungslose Ausgestaltung denkbar. Der Grund dafür ist, daß das Andrückmittel nicht im Bereich der Schieberflächen 12, 13, sondern an anderer Stelle arbeitet. Der Bereich zwischen den Schieberflächen 12, 13 und den Abstützflächen 24 ist also andrückmittelfrei und dadurch zugunsten optimaler Dichtheit sehr exakt bearbeitbar. Beispielsweise läßt sich ein Metallschieber verwenden, der durch Läppen fein bearbeitet worden ist, wobei Metalldichtungen verwendbar sind.

Bei dem in den Figuren 1 bis 5 dargestellten Ventil ist als Andrückmittel ein Fluid vorgesehen, das vom Arbeitsmedium des Ventils abgezweigt wird, d.h. aus mindestens einem der Ventilkanäle 10 stammt. Hierzu ist der Ventilschieber 7 zweiteilig ausgeführt und umfaßt zwei plattenförmige, quer zur Verstellrichtung 21 nebeneinander bwz. aufeinander angeordnete Schieberelemente 26, 27. Zwischen diesen befindet sich während des Betriebes der Andrückeinrichtung das insbesondere von Druckluft gebildete fluidische Andrückmittel 25, während die einander entgegengesetzten Schieberelementenseiten die beiden Schieberflächen 12, 13 bilden.

Vor allem die Figur 2 macht gut deutlich, daß zwischen den beiden Schieberelementen 26, 27 eine ein- oder mehrteilige Dichtungsanordnung 28 vorgesehen ist, die zusammen mit den beiden Schieberelementen 26, 27 mindestens einen Fluidraum 29 begrenzt.

Die Dichtungsanordnung 28 besitzt für jede Schieber-Durchbrechung 22 ein inneres Dichtungselement 30, das ringartig in sich geschlossen ist und sich entlang des Randes der jeweiligen Schieberdurchbrechung 22 erstreckt. Es ist ferner ein weiteres, ebenfalls in sich geschlossenes äußeres Dichtungselement 31 vorhanden, das dem Randbereich des Ventilschiebers 7 zugeordnet ist und sich um alle inneren Dichtungselemente 30 erstreckt. Es ergibt sich dadurch ein zusammenhängender Fluidraum 29 zwischen den inneren und äußeren Dichtungselementen 30, 31, der nahezu die gesamte Fläche im Zwischenbereich zwischen den beiden Schieberelementen 26, 27 einnehmen kann. Alle Dichtelemente können zu einer einstückigen Dichtmaske miteinander verbunden sein.

Die beiden Schieberelemente 26, 27 können unter Zwischenfügung der Dichtungsanordnung 28 lose aufeinandergelegt sein, wobei jedenfalls Mittel vorhanden sein können, die eine relative Verschiebebewegung zwischen den beiden Schieberelementen 26, 27 in deren Trennebene ausschließen. Solche Mittel können z.B. Querstifte sein oder werden beispielsweise unmittelbar von wenigstens einem Teil der Dichtungsanordnung 28 gebildet, indem selbige gleichzeitig in Vertiefungen beider Schieberelemente 26, 27 eingelegt ist oder von Vorsprüngen derselben hintergriffen wird. Letzteres ist beim Ausführungsbeispiel der Fall.

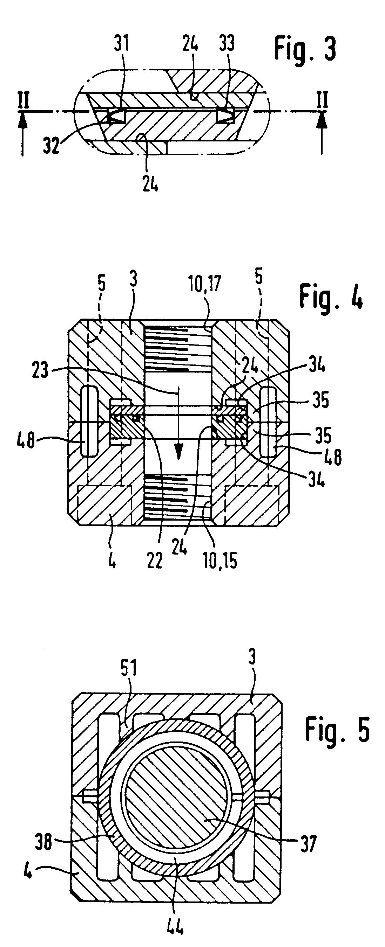

Aus den Figuren 1 und 3 wird deutlich, daß wenigstens eines der beiden Schieberelemente 27 dem Verlauf der Dichtungsanordnung 28 entsprechende nutartige Vertiefungen 32 an der dem anderen Schieberelement 26 zugewandten Trennfläche besitzt, in die die Dichtungsanordnung 28 eingelegt ist. Die Dichtungsanordnung 28 ist quer zur Schiebermittelebene biegeelastisch, so daß sie auch bei sich veränderndem Abstand zwischen den beiden Schieberelementen 26, 27 gleichzeitig an beiden dichtend zur Anlage kommt. Eine bevorzugte Besonderheit ist darin zu sehen, daß die Dichtungselemente 30, 31 mit einer fluidischen Rückschlagfunktion ausgestattet sind, derart, daß sie eine Strömung von Druckmittel in den Fluidraum 29 hinein gestatten, während sie eine Fluidströmung in Gegenrichtung ausschließen oder zumindest behindern. Beim Ausführungsbeispiel wird diese Rückschlagwirkung dadurch erzielt, daß als Dichtungselemente Lippendichtringe verwendet werden, die mindestens eine Rückschlag-Dichtlippe 33 besitzen. Zum Beispiel haben die Dichtungselemente 30, 31 einen im wesentlichen U- oder V-förmigen Querschnitt, wobei die U- bzw. V-Öffnung dem Fluidraum 29 zugewandt ist und einer der jeweiligen Schenkel die Rückschlagdichtlippe 33 bildet.

Auf diese Weise kann im Betrieb des Ventils in den Ventilkanälen 10 strömendes Arbeitsmedium im Bereich der Trennstelle zwischen den beiden Schieberelementen 26, 27 unter Überwindung der Dichtungsanordnung 28 in den Fluidraum 29 einströmen. Dies hat den Vorteil, daß der im Fluidraum 29 herrschende Druck in Abhänigigkeit vom Druck des Arbeitsmediums variiert und sich z.B. proportional zu diesem ändert. Damit ändert sich die Andrückintensität zwischen den Schieberflächen 12, 13 und den Abstützflächen 24 in Abhängigkeit vom Betriebsdruck, was jederzeit eine optimale Führung und Anschmiegung für den Ventilschieber 7 bedeutet. Außerdem ergibt sich eine unabhängig von der Schieberstellung stattfindende Zuführung von Andrückmittel in den Fluidraum.

Es versteht sich, daß das Andrückfluid auch über einen geeigneten Schieberkanal in den Fluidraum 29 zuführbar ist, allerdings ist auch hier von Vorteil, wenn der entsprechende Kanal mit einer Rückschlagventilanordnung der oben beschriebenen Wirkung zusammenarbeitet. Ebenso kann natürlich die Zufuhr des Andrückmittels 25 auch separat und unabhängig vom Arbeitsmedium des Ventils erfolgen, z.B. abgeleitet von einer der Betätigungseinrichtungen 9, 9′ oder unter Verwendung einer eigenen Druckmittelversorgung.

Wie man vor allem den Figuren 2 und 4 gut entnehmen kann, ist der Ventilschieber 7 zweckmäßigerweise auch randseitig, d.h. im Bereich seines schmalens Längsrandes, verschiebegeführt. Hierzu sind gehäuseseitig entsprechende Führungsflächen 34 vorgesehen, die an sich jeweils paarweise gegenüberliegenden Führungsnocken 35 oder Führungsrippen der beiden Gehäuseteile 3, 4 ausgebildet sein können.

Wie den Figuren 1, 3 und 4 entnehmbar ist, kann das die überschneidungsfrei arbeitenden Durchbrechungsöffnungen aufweisende Schieberelement 26 infolge der geringeren Biegebelastbarkeit dünner ausgeführt sein, als das zweite Schieberelement 27. Unabhängig davon setzen sich die Schieberdurchbrechungen 22 bei mehrteiligem Ventilschieber 7 aus quer zur Verstellrichtung 21 aufeinanderfolgenden den einzelnen Elementen zugeordneten Durchbrechungsabschnitten zusammen.

Die beiden erwähnten Betätigungseinrichtungen 9, 9′ sind beim Ausführungsbeispiel gemäß Figuren 1 bis 5 identisch aufgebaut und bestehen jeweils aus einem in das Ventilgehäuse 1 eingebauten oder integrierten Betätigungszylinder 36, in dem ein in Längsrichtung 8 hin und her bewegbarer Betätigungskolben 37 angeordnet ist. Wegen der Identität erfolgt die Beschreibung lediglich anhand einer der Betätigungseinrichtungen 9. Es ist natürlich auch möglich pro Ventil verschiedenartige Betätigungseinrichtungen zu kombinieren, wobei z.B. eine Betätigungseinrichtung eine Rückstellfederanordnung umfassen kann.

Der Betätigungszylinder 36 besteht aus einem endseitig zwischen die beiden Gehäuseteile 3, 4 eingesetzten zylindrischen Führungsteil 38, das den Kolben 37 verschiebbar aufnimmt und an der dem Schieber 7 abgewandten Seite durch einen insbesondere integralen Deckel 39 verschlossen ist. Auf diese Weise liegt ein insgesamt kappenartiges Abschlußteil vor, das noch eine Anschlußöffnung 40 besitzt, um dem der schieberabgewandten Kolbenseite zugeordneten Zylinderraum 41 das Betätigungsfluid zuführen zu können. Der Kolben 37 baut axial relativ schmal, da er einen in Richtung zum Ventilschieber 7 vorspringenden zusätzlichen Führungsfortsatz 42 aufweist, der in einer mit der Schieberaufnahme 6 kommunizierenden bzw. ein Teil derselben bildenden Führungsausnehmung 43 läuft.

Unabhängig davon ist ein wesentlicher Vorteil der Betätigungseinrichtungen 9, 9′, daß umfangsseitig zwischen Kolben 37 und Führungsteil 38 eine weichelastische Dichtung weggelassen werden kann, weshalb beim Ausführungsbeispiel in diesem Bereich lediglich ein z. B. aus Hartkunststoff bestehender Kolbenring bzw. Gleitring 44 vorgesehen ist. Stattdessen verfügt der Betätigungskolben 37 an seiner dem Schieber 7 zugewandten Seite über einen axial vorragenden Ringvorsprung 45, dem axial ein gehäusefest angeordneter Dichtungsring 46 gegenüberliegt. Wenn der Betätigungskolben 37 seine weiter an die gegenüberliegende Betätigungseinrichtung 9′ angenäherte Hubendlage einnimmt, wobei er den Ventilschieber 7 in seine erste Schaltstellung verbracht hat, dann arbeitet der Ringvorsprung 45 gegen den Dichtungsring 46, in den er sich bei elastischer Ausgestaltung eindrücken kann. Da das Führungsteil 38 z.B. ebenfalls über den Dichtungsring 46 zur Außenseite hin abgedichtet ist, sind in der genannten Hubendlage beide Zylinderräume des Betätigungszylinders 36 abgedichtet. Der Vorteil dieser Anordnung besteht insbesondere darin, daß mangels gummielastischer Gleitdichtungen eine hohe Betätigungsgeschwindigkeit des Kolbens 37 erzielt werden kann und dennoch im betätigten Zustand, wenn der Zylinderraum 41 unter Druck steht, keine Leckluft nach außen strömt. Das während der Betätigung am Kolben 37 vorbeiströmende Fluid gelangt in den dem ersten Zylinderraum 41 entgegengesetzten inneren Zylinderraum 47, der über einen Leckage-Kanal 48 mit dem inneren Zylinderraum 47′ der zweiten Betätigungseinrichtung 9′ kommuniziert. Vorzugsweise ist der Leckage-Kanal 48 von einem im Bereich der Trennstelle 2 vorgesehenen Spalt zwischen den beiden Gehäuseteilen 3, 4 gebildet und kann weiterhin mit einer Leckage-Abführöffnung 49 des Ventilgehäuses 1 kommunizieren. Zweckmäßigerweise erstreckt sich der Leckage-Kanal 48 im Bereich der Trennstelle 2 um den Ventilschieber 7 und dessen Schieberaufnahme 6 herum, so daß er auch aus den Ventilkanälen 10 austretende Leckluft aufnehmen und abführen kann. Insgesamt ergibt sich so ein innen druckloses Ventilgehäuse 1, so daß an die Gehäuseteil-Verbindungsmittel nur geringe Festigkeitsanforderungen zu stellen sind. Im übrigen bedarf es auch keiner besonderen seitlichen Abdichtung des Leckage-Kanals 48 in Richtung zur Außenseite des Ventils, dort sind allerdings nicht näher dargestellte Abdichtungen zur Vermeidung des Eintrittes von Verunreinigungen zweckmäßig.

Demzufolge handelt es sich bei den beiden Betätigungszylindern 36 um solche einfach wirkender Art, der Kolben des jeweils nicht betätigten Zylinders wird vom anderen Kolben unter Vermittlung des zwischengefügten Schiebers 7 in seine Ausgangsstellung zurückbewegt. Zwischen den Schieberstirnseiten und den Stirnseiten des jeweiligen Kolbens 37 bzw. dessen Führungsfortsatzes 42 reicht eine Berührungsanlage aus.

Der oben erwähnte Dichtungsring 46 ist zweckmäßigerweise in eine Ventilgehäuseausnehmung eingelegt und wird in seinem radial außerhalb des Ringvorsprunges 45 angesiedelten Bereich von der Stirnseite des eingesetzten hülsenförmigen Führungsteils 48 dichtend beaufschlagt. Zur Abstützung kann zwischen den Dichtungsring 46 und das Gehäuse noch ein Stützring 50 aus Stahl zwischengefügt sein. Seinen Halt innerhalb des Ventilgehäuses 1 erhält der Betätigungszylinder 36 zweckmäßigerweise von ihn axial außen hintergreifenden klauenartigen Fortsätzen 51 der beiden Gehäuseteile 3, 4.

Zur Aussteifung im Bereich seiner Schieber-Durchbrechungen 22 kann der Ventilschieber 7 mit in Figur 2 lediglich strichpunktiert angedeuteten Versteifungsstegen 52 ausgestattet sein, die eine jeweilige Schieber-Durchbrechung 22 überspannen und vorzugsweise einstückiger Bestandteil des Schiebers sind. Die Erstreckungsrichtung der Stege fällt zweckmäßigerweise mit der Längsrichtung 8 zusammen, wobei mehrere der Stege 52 beabstandet nebeneinander pro Durchbrechung 22 vorgesehen sein können.

Im Zusammenhang mit einer Ventilausgestaltung, bei der dem Fluidraum 29 Druckmittel über eine Rückschlagventilanordnung zuführbar ist, kann noch eine in Figur 7 schematisch angedeutete Entsperreinrichtung 57 für die Rückschlagfunktion vorgesehen sein, die beim Umschalten des Ventils zwischen zwei Schaltstellungen ein zumindest zeitweises Belüften des Fluidraumes 29 bewirkt. Gemäß Figur 7 wird die Entsperreinrichtung 57 von einem der schematisch angedeuteten Betätigungskolben 57 der Betätigungseinrichtungen 9, 9′ geschaltet. Hierbei ist z.B. ein von einer Schieberstirnseite her in Verstellrichtung 21 in den Ventilschieber 7 hineinragender Betätigungsstößel 58 vorgesehen, der mit seiner Stirnseite bis in den Bereich des Rückens eines der Dichtungselemente 31 ragt. Seine Stirnseite ist dabei so konturiert, daß sie das mit einer Rückschlagdichtlippe 33 ausgestattete Dichtungselement 31 von außen her zumindest ein Stück weit umgreifen kann, wobei die Rückschlagdichtlippe 33 unter Abhebung vom zugeordneten Schieberelement 26 nach innen gebogen wird. Der Betätigungsstößel 58 steht mit dem Betätigungskolben 37 in Verbindung, und wenn dieser gemäß Pfeil 59 in Richtung zum Ventilschieber 7 verstellt wird, dann bewegt sich der Betätigungsstößel 58 gemäß Pfeil 60 auf das Dichtungselement 31 zu und hebt die Rückschlagdichtlippe 33 ab. Dadurch strömt das fluidische Andrückmittel aus dem Fluidraum 29 aus, die Andrückintensität zwischen Ventilschieber 7 und Ventilgehäuse 1 ist reduziert, und bei der weitergehend Kolbenbewegung ist eine Schieberverstellung mit erheblich reduzierter Betätigungskraft und mit erhöhter Schaltgeschwindigkeit möglich. Eine zwischen dem Ventilschieber 7 und den Betätigungskolben 37 zwischengeschaltete Rückstellfeder 61 kann bewirken, daß der Kontakt zwischen dem Betätigungsstößel 58 und dem Dichtungselement 31 nur kurzzeitig ist und z.B. nur während der Anfahrbewegung stattfindet.

In Figur 10 ist eine weitere Ventilbauform abgebildet, wobei entsprechende Bauteile mit den gleichen Bezugszeichen wie bisher versehen worden sind. Hier ist ein einteiliger Ventilschieber 7 vorgesehen, der mit seinen beiden Schieberflächen 12, 13 zwischen gehäusefesten Abstützflächen 24 läuft. Dabei sind wenigstens die mit einer Schieberfläche 13 zusammenarbeitenden Abstützflächen 24 quer zur Verstellrichtung 21 des Ventilsschiebers 7 bewegbar und gegen die Schieberfläche 13 andrückbar. Die Andrückkraft wird auch hier von mindestens einem Andrückmittel 25 gebildet, das zwischen dem jeweiligen, eine Abstützfläche 24 aufweisenden Abstützelement 62 und dem Ventilgehäuse arbeitet. Beim Ausführungsbeispiel ist vorteilhafterweise ein alle Abstützflächen 24 der einen Seite aufweisendes Abstützelement 62 vorhanden, und als Andrückmittel 25 sind Federelemente 63 oder Federanordnungen vorgesehen. Gleichwohl ist natürlich auch hier alternativ oder zusätzlich ein fluidisches Andrückmittel in der bereits oben beschriebenen entsprechenden Art und Weise verwendbar. Zumal im Bereich zwischen dem oder den Abstützelementen 62 und dem Ventilgehäuse 1 sowieso Dichtungselemente 67 erforderlich sein werden, die man zur Begrenzung eines Fluidraumes verwenden könnten.

Ventile mit nicht-fluidischen Andrückmitteln sind vor allem in Fällen gleichbleibender Ventilbeanspruchung aufgrund des kostengünstigeren Aufbaus vorteilhaft einsetzbar. Auch das Ventil gemäß den Figuren 1 bis 5 kann zusätzlich oder statt des fluidischen Andrückmittels mit einem nicht-fluidischen, insbesondere als Federanordnung ausgebildeten Andrückmittel ausgestattet sein.

Der beim Ausführungsbeispiel gemäß Figuren 1 bis 5 bevorzugt eingesetzte asymmetrisch geteilte Ventilschieber 7 hat auch den Vorteil, daß die im Bereich der Trennstelle zwischen den beiden Schieberelementen 26, 27 erfolgende Zufuhr des fluidischen Andrückmediums eine günstige Anströmung der Rückschlagdichtlippe 33 gewährleistet. Das erfindungsgemäße Ventil ist zusammen mit gleichartigen Ventilen problemlos zu kompakten Ventilanordnungen zusammenfaßbar. Auch lassen sich mehrere der Ventile problemlos stappeln.

Abschließend wird anhand der Figur 6 eine weitere Ausführungsform einer Betätigungseinrichtung 9, 9′ für ein fluidisch betätigtes Schieberventil beschrieben. Sie eignet sich vor allem ausgezeichnet für die Verwendung in einem Ventil des vorstehend beschriebenen Aufbaus. Dennoch ist diese Art einer Betätigungseinrichtung auch für beliebige andere Schieberventile verwendbar. Sie zeichnet sich dadurch aus, daß sie bei paarweiser zwischen sich den nicht näher dargestellten Ventilschieber 7 aufnehmender Anordnungsweise eine Drei-Stellungs-Betätigung mit klar definierter Mittelstellung erlaubt.

Wegen des identischen Aufbaus erfolgt die Beschreibung in Figur 6 anhand lediglich einer der Betätigungseinrichtungen 9. Sie umfaßt einen Betätigungszylinder 36, mit einem Führungsgehäuse oder Führungsteil 38, in dem in Längsrichtung 8 verschiebbar ein Kolben 37 angeordnet ist. Zwischen dem Außenumfang des Betätigungskolbens 37 und dem Innenumfang des Führungsteils 38 ist eine sowohl gegenüber dem Führungsteil als auch gegenüber dem Kolben 37 axial verschiebbare Gleithülse 67 angeordnet. An letzterer sind axial beidseits des Kolbens jeweils nach radial innen vorspringende Mitnehmer 68, 68′ ausgebildet, die zweckmäßigerweise nach Art von Ringvorsprüngen aufgebaut sind. Der axiale Abstand zwischen den beiden Mitnehmern 68, 68′ ist größer als die Kolbendicke, und zwischen der Gleithülse 67 und dem Kolben 37 ist eine relative Verschiebebewegung zwischen zwei Endstellungen möglich, in denen der Kolben am einen oder anderen Mitnehmer zur Anlage gelangt. Zwischen dem Kolben 37 und der Gleithülse 67 einerseits und zwischen der Gleithülse 67 und dem Führungsteil 38 andererseits ist jeweils eine Dichtungsanordnung 69 vorgesehen. Der der gegenüberliegende Betätigungseinrichtung 9′ abgewandte äußere Zylinderraum 41 der Betätigungseinrichtung 9 ist über eine Anschlußöffnung 40 mit Druckmittel beaufschlagbar. Die Gleithülse 67 ist kürzer als der Zylinderraum.

Der Aufbau der gegenüberliegenden Betätigungseinrichtung 9′ ist entsprechend, so daß sich hierzu weitere Ausführungen erübrigen.

Die Funktionsweise wird nachfolgend erläutert. Ausgehend von der ersten Schaltstellung, in der sowohl die Gleithülse 67 als auch der Kolben 37 der einen Betätigungseinrichtung 9′ die äußere Hubendlage einnehmen, wird dem zugeordneten äußeren Zylinderraum 41 Druckmittel zugeführt. Dadurch fahren sowohl der Kolben 37 als auch die Gleithülse 67 nach rechts, wodurch zunächst der Kolben 37 der anderen Betätigungseinrichtung 9 und anschließend, nach dem Auflaufen dessen auf den äußeren Mitnehmer 68, auch die zugeordnete Gleithülse 67 nach rechts bis zur Hubendlage bewegt werden. Der entsprechende Bewegungsablauf im umgekehrten Sinne findet statt, wenn der Betätigungseinrichtung 9 das Betätigungsfluid zugeführt wird.

Wesentlich ist nun aber, daß sich bei in den beiden Zylinderräume, 41 anstehendem gleichem Betätigungsdruck die in Figur 6 abgebildete Mittelstellung ergibt. Die Summe der vom äußeren Zylinderraum 41 her auf die wirksamen Flächen der Gleithülse 67, deren äußeren Mitnehmern 68 und die zugewandte Kolbenfläche einwirkenden Druckkräfte ist beidseits identisch. Würde sich, angenommen, die über den zwischengefügten Schieber aneinandergekoppelte Kolbenanordnung ausgehend von der Mittellage geringfügig in die eine oder andere axiale Richtung bewegen, dann hätte dies sofort eine Verringerung der wirksamen Druckflächen zur Folge, so daß das gesamte System wieder in die Gleichgewichts-Mittellage zugekehren würde.

Auf diese Weise läßt sich ein präzise arbeitendes Drei-Stellungs-Ventil schaffen, bei dem in einer Mittelstellung alle Kanäle 14 bis 18 abgeschlossen sind und sich der angeschlossene Verbraucher in einer klar definierten Ruhestellung befindet.

## Patentansprüche

1. Ventil, mit einem Ventilgehäuse (1), das eine Schieberaufnahme (6) enthält, die seitlich auf einander entgegengesetzten Seiten Mündungen (11) mindestens einer Zuströmöffnung und einer Abströmöffnung für ein insbesondere pneumatisches Fluid aufweist, mit einem in der Schieberaufnahme (6) zwischen mindestens zwei Schaltstellungen hin und her verstellbaren Ventilschieber (7), der mindestens eine ihn quer zu seiner Verstellrichtung (21) durchdringende und an entgegengesetzten Schieberflächen (12,13) zu den Mündungsseiten der Schieberaufnahme (6) hin offene Schieber-Durchbrechung (22) für die Querdurchströmung des Fluids aufweist, wobei im Bereich der beiden Schieberflächen (12,13) neben mindestens einer Schieber-Durchbrechung (22) angeordnete ventilschieberseitige Gleitflächen durch ein fluidisches Andrückmittel (25) gegen ventilgehäuseseitige Abstützflächen (24) andrückbar sind, dadurch gekennzeichnet, daß der Ventilschieber (7) zwei plattenförmige, quer zur Verstellrichtung (21) des Ventilschiebers (7) mit veränderbarem Abstand nebeneinander angeordnete Schieberelemente (26,27) umfaßt, an denen jeweils eine der beiden mündungsseitigen Schieberflächen (12,13) und zugleich die an die Abstützflächen (24) andrückbaren ventilschieberseitigen Gleitflächen vorgesehen sind, und daß zwischen den beiden plattenförmigen Schieberelementen (26,27) eine elastische Dichtungsanordnung (28) vorgesehen ist, die im Zwischenbereich der Schieberelemente (26,27) einen mit dem fluidischen Andrückmittel (25) beaufschlagbaren Fluidraum (29) begrenzt und unabhängig vom momentanen Abstand der beiden Schieberelemente (26,27) gleichzeitig mit beiden Schieberelementen (26,27) in Dichtkontakt steht.

2. Ventil nach Anspruch 1, dadurch gekennzeichnet, daß das fluidische Andrückmittel (25) unabhängig von der Schieberstellung zuführbar ist.

3. Ventil nach Anspruch 1 oder 2, dadurch gekennzeichnet, daß das fluidische Andrückmittel (25) vom Arbeitsmedium des Ventils abgezweigt wird, zweckmäßigerweise kontinuierlich derart, daß die Andrückintensität in Abhängigkeit vom Druck des Arbeitsmediums variabel ist.

4. Ventil nach einem der Ansprüche 1 bis 3, dadurch gekennzeichnet, daß die Dichtungsanordnung (28) aus Lippendichtringen besteht, die einen U- oder V-förmigen Querschnitt aufweisen, wobei die U- bzw. V-öffnung dem Fluidraum (29) zugewandt ist.

5. Ventil nach einem der Ansprüche 1 bis 3, dadurch gekennzeichnet, daß die Dichtungsanordnung (28) für jede Schieber-Durchbrechung (22) ein diese umgebendes inneres Dichtungselement (30) und außerdem ein alle inneren Dichtungselemente (30) umgebendes, in sich geschlossenes und zweckmäßigerweise dem Schieberrandbereich zugeordnetes äußeres Dichtungselement (31) enthält, wobei zwischen den inneren Dichtungselementen (30) und dem äußeren Dichtungselement (31) der mit dem fluidischen Andrückmittel (25) beaufschlagbare Fluidraum (29) eingeschlossen ist.

6. Ventil nach einem der Ansprüche 1 bis 5, dadurch gekennzeichnet, daß in die Verbindung zwischen einem Arbeitsmedium führenden Ventilkanal (10) und dem Fluidraum (29) des Ventilschiebers (7) eine in Richtung zum letzteren hin öffnende und in Gegenrichtung sperrende Rückschlagventilanordnung (33) zwischengeschaltet ist.

7. Ventil nach Anspruch 6, dadurch gekennzeichnet, daß die Rückschlagventilanordnung (33) von mindestens einem, mit einer fluidischen Rückschlagfunktion ausgestatteten Dichtelement (30,31) der Dichtungsanordnung (28) gebildet ist, zu welchem Zweck dieses Dichtelement (30,31) insbesondere als Lippendichtring ausgestaltet ist, der mindestens eine Rückschlag-Dichtlippe (33) besitzt.

8. Ventil nach Anspruch 6 oder 7, dadurch gekennzeichnet, daß eine Entsperreinrichtung (57) für die Rückschlagventilanordnung (33) vorgesehen ist, die den Fluidraum (29) beim Umschalten des Ventils zumindest zeitweise belüftet.

9. Ventil nach Anspruch 8, mit mindestens einem für die Verstellbewegung des Ventilschiebers (7) vorgesehenen Betätigungskolben (9), dadurch gekennzeichnet, daß die Entsperreinrichtung (57) einen von einer axialen Schieberstirnseite her in Verstellrichtung (21) in den Zwischenbereich der Schieberelemente (26,27) hineinragenden Betätigungsstößel (58) aufweist, der vom sich in Richtung des Ventilschiebers (7) bewegenden Betätigungskolben gegen die Dichtungsanordnung (28) andrückbar ist, um den Dichtkontakt zu mindestens einem Schieberelement vorübergehend aufzuheben.

10. Ventil nach einem der Ansprüche 1 bis 9, dadurch gekennzeichnet, daß die beiden Schieberelemente (26,27) unter Zwischenfügung der Dichtungsanordnung (28) lose aufeinandergelegt sind.

11. Ventil nach einem der Ansprüche 1 bis 10, dadurch gekennzeichnet, daß die beiden Schieberelemente (26,27) mittels der Dichtungsanordnung (28) gegen eine relative Verschiebebewegung in der Trennebene gesichert sind, indem die Dichtungsanordnung (28) von Vorsprüngen beider Schieberelemente (26,27) hintergriffen wird.

12. Ventil nach einem der Ansprüche 1 bis 11, dadurch gekennzeichnet, daß der Ventilschieber (7) eine platten- oder leistenförmige Flachgestalt besitzt und mehrere in Verstellrichtung (21) aufeinanderfolgend angeordnete, quer zu seiner Hauptmittelebene verlaufende Schieber-Durchbrechungen (22) aufweist.

13. Ventil nach einem der Ansprüche 1 bis 11, wobei zur Schieberverstellung im Bereich wenigstens einer Schieberstirnseite ein Betätigungszylinder (36) mit einem Betätigungskolben (37) vorgesehen ist, dadurch gekennzeichnet, daß an der dem Ventilschieber (7) zugewandten Seite des insbesondere dichtungslosen Betätigungskolbens (37) oder an der dieser Seite gegenüberliegenden, insbesondere vom Ventilgehäuse (1) gebildeten Zylinderpartie ein axialer Ringvorsprung (45) angeordnet ist und das jeweils andere Bauteil (1,37) einen dem Ringvorsprung (45) axial gegenüberliegenden, insbesondere elastischen Dichtungsring (46) aufweist, wobei der Ringvorsprung (45) in der einen Kolbenendlage gegen und insbesondere in den Dichtungsring (46) gedrückt bzw. eingedrückt wird. (Figur 1)

14. Ventil insbesondere nach einem der Ansprüche 1 bis 13, wobei zur Schieberverstellung im Bereich beider Schieberstirnseiten jeweils ein Betätigungszylinder (36) mit Betätigungskolben (37) vorgesehen ist, dadurch gekennzeichnet, daß sich zwischen dem Außenumfang des Betätigungskolbens (37) und dem Innenumfang des Führungsteils (38) des Zylinders (36) eine sowohl gegenüber dem Führungsteil (38) als auch gegenüber dem Kolben (37) axial relativ verschiebbare Gleithülse (67) befindet, und wobei an der Gleithülse (67) axial beidseits des Betätigungskolbens (37) jeweils die axiale Relativbewegung zwischen Kolben (37) und Gleithülse (67) begrenzende Mitnehmer (68,68′) angeordnet sind, derart, daß bei identischen Druckflächengegebenheiten beider Betätigungseinrichtungen (9,9′) bei gleichzeitiger identischer Druckbeaufschlagung der beiden schieberabgewandten Zylinderräume (41) sich eine definierte Schiebermittelstellung einstellt, in der die beiden Gleithülsen (67) mit den voneinander abgewandt angeordneten Mitnehmern (68) gegen den jeweils zugeordneten Kolben (37) arbeiten.

15. Ventil nach einem der Ansprüche 1 bis 14, dadurch gekennzeichnet, daß mindestens eine Schieber-Durchbrechung (22) von mindestens einem Versteifungssteg (52) überspannt ist.

16. Ventil nach einem der Ansprüche 1 bis 15, wobei zur Schieberverstellung im Bereich beider Schieberstirnseiten jeweils ein Betätigungszylinder (36) mit Betätigungskolben (37) vorgesehen ist, dadurch gekennzeichnet, daß die beiden einander zugewandten inneren Zylinderräume (47) über einen Gehäuse-Leckage-Kanal (48) miteinander kommunizieren, der zweckmäßigerweise die Schieberaufnahme (6) im Bereich einer Gehäusetrennstelle (2) umgibt und aus der Schieberaufnahme (6) austretendes Leckfluid aufnehmen kann, und der ferner zweckmäßigerweise mit einer Leckage-Abführöffnung (49) des Ventilgehäuses (1) kommuniziert.

17. Ventil nach einem der Ansprüche 1 bis 16, dadurch gekennzeichnet, daß das Ventilgehäuse (1) im Bereich der Schieberaufnahme (6) insbesondere hälftig längsgeteilt ist und aus zwei im Bereich einer Trennstelle (2) aneinandergesetzten jeweils einem der Schieberelemente (26,27) zugeordneten Gehäuseteilen (3,4) besteht.

## Claims

1. Valve, with a valve housing (1) containing a slide mounting (6), having on opposite sides orifices (11), at least one inflow orifice and one outflow orifice for a fluid, in particular pneumatic, with a valve slide (7) adjustable to and fro in the slide mounting (6) between at least two switching positions, having at least one slide opening (22) for the transverse flow of the fluid, penetrating at right-angles to its direction of adjustment (21) and open at opposite slide faces (12, 13) to the orifice sides of the slide mounting (6), wherein in the area of the two slide faces (12, 13), sliding faces on the valve slide side located alongside at least one slide opening (22) can be pressed against support faces (24) on the valve housing side by a fluid pressure medium (25), characterized in that the valve slide (7) comprises two plate-shaped slide elements (26, 27) mounted at right-angles to the direction of adjustment (21) of the valve slide (7), with variable distance between them, at each of which are provided one of the two orifice-side slide faces (12, 13) and at the same time the sliding faces on the valve slide side which can be pressed against the support faces (24), and that between the two plate-shaped slide elements (26, 27) is provided a flexible sealing assembly (28) which, in the area between the slide elements (26, 27), bounds a fluid chamber (29) to which the fluid pressure medium (25) can be admitted, and which is simultaneously in sealing contact with both slide elements (26, 27), irrespective of the momentary distance between the two slide elements (26, 27).

2. Valve according to claim 1, characterized in that the fluid pressure medium (25) can be admitted irrespective of the slide position.

3. Valve according to claim 1 or 2, characterized in that the fluid pressure medium (25) is taken off from the operating medium of the valve, expediently continuously in such a way that the intensity of pressure varies with the pressure of the operating medium.

4. Valve according to any of claims 1 to 3, characterized in that the sealing assembly (28) is comprised of lip seal rings with a U- or V-shaped cross-section, wherein the U- or V-opening faces the fluid chamber (29).

5. Valve according to any of claims 1 to 3, characterized in that the sealing assembly (28) contains for each slide opening (22) an internal sealing element (30) surrounding same and in addition a self-contained external sealing element (31) expediently assigned to the slide edge area and surrounding all internal sealing elements (30), with the fluid chamber (29) to which the fluid pressure medium (25) can be admitted being enclosed between the internal sealing elements (30) and the external sealing element (31).

6. Valve according to any of claims 1 to 5, characterized in that, interposed in the connection between a valve passage (10) conveying an operating medium and the fluid chamber (29) of the valve slide (7) is a non-return valve assembly (33) open in the direction of the latter and closed in the opposite direction.

7. Valve according to claim 6, characterized in that the non-return valve assembly (33) is formed by one or more sealing elements (30, 31), provided with a fluidic non-return function, of the sealing assembly (28), for which purpose this sealing element (30, 31) is in particular in the form of a lip seal ring with one or more non-return sealing lips (33).

8. Valve according to claim 6 or 7, characterized in that the non-return valve assembly (33) is provided with an unblocking device (57), which at least partly ventilates the fluid chamber (29) during switching-over of the valve.

9. Valve according to claim 8, with at least one actuating piston (9) provided for the adjusting movement of the valve slide (7), characterized in that the unblocking device (57) has an actuating ram (58) projecting from one axial slide end face in the direction of adjustment (21) into the area between the slide elements (26, 27), said ram being pressable against the sealing assembly (28) by the actuating piston moving in the direction of the valve slide (7), in order to lift temporarily the sealing contact from at least one slide element.

10. Valve according to any of claims 1 to 9, characterized in that the two slide elements (26, 27) are placed loosely on top of one another with the sealing assembly (28) inserted between them.

11. Valve according to any of claims 1 to 10, characterized in that the two slide elements (26, 27) are secured by means of the sealing assembly against any relative displacement in the separation plane, by virtue of projections of the two slide elements (26, 27) engaging the sealing assembly (28) from behind.

12. Valve according to any of claims 1 to 11, characterized in that the valve slide (7) has a plate- or strip-shaped flat configuration and several slide openings (22) running at right-angles to its principal centre plane and arranged consecutively in the direction of adjustment (21).

13. Valve according to any of claims 1 to 11, wherein an actuating cylinder (36) with an actuating piston (37) is provided for slide adjustment in the vicinity of at least one slide end face, characterized in that, at that side of the in particular seal-less actuating piston (37) facing the valve slide (7) or on that cylinder section (37) lying opposite the latter side, in particular formed by the valve housing (1), is located an axial annular projection (45), and that the other component (1, 37) in each case has a seal ring (46), in particular flexible, axially opposite the annular projection (45), wherein in one piston end position the annular projection (45) is pressed against and in particular into the seal ring (46)(Figure 1).

14. Valve in particular according to any of claims 1 to 13, wherein for slide adjustment an actuating cylinder (36) with actuating piston (37) is provided in the area of each slide end face, characterized in that between the outer periphery of the actuating piston (37) and the inner periphery of the guide section (38) of the cylinder (36) is located a sliding sleeve (67), slidable both against the guide section (38) and also axially relative to the piston (37), and wherein carriers (68, 68′) limiting the axial relative movement between piston (37) and sliding sleeve (67) are located on the sliding sleeve (67) axially either side of the actuating piston (37) in such a way that, with identical pressure face parameters on both actuating devices (9, 9′), with simultaneous identical pressure loading of the two cylinder spaces (41) facing away from the slide, a defined slide mid-position is assumed, in which the two sliding sleeves (67) act with the carriers arranged facing away from one another against the respectively assigned piston (37).

15. Valve according to any of claims 1 to 14, characterized in that at least one slide opening (22) is spanned by at least one reinforcing web (52).

16. Valve according to any of claims 1 to 15, wherein for slide adjustment an operating cylinder (36) with operating piston (37) is provided in the area of each slide end face, characterized in that the two inner cylinder spaces (47) facing one another are in communication via a housing-leakage passage (48), which expediently surrounds the slide mounting (6) in the vicinity of a housing separation point (2) and can take up leaking fluid escaping from the slide mounting (6), and which also communicates expediently with a leakage outlet orifice (49) of the valve housing (1).

17. Valve according to any of claims 1 to 16, characterized in that the valve housing (1) is divided longitudinally, in particular in half, in the area of the slide mounting (6), and comprises two housing sections (3, 4) set together in the vicinity of a separation point (2), each assigned to one of the slide elements (26, 27).

## Revendications

1. Soupape, avec un corps de soupape (1), qui contient un logement de tiroir (6), lequel présente latéralement sur des côtés opposés l'un à l'autre des embouchures (11) d'au moins une ouverture d'arrivée et une ouverture d'échappement pour un fluide, en particulier pneumatique, avec un tiroir de soupape (7) pouvant être déplacé en va-et-vient dans le logement de tiroir (6) entre au moins deux positions de réglage, lequel présente au moins un passage (22) à travers le tiroir pour la circulation du fluide qui le traverse perpendiculairement à son sens de déplacement (21) et qui est ouvert sur des faces (12, 13) opposées du tiroir en regard des embouchures du logement de tiroir (6), dans laquelle, dans la région des deux faces de tiroir (12, 13), des surfaces de glissement situées du côté du tiroir de soupape et disposées près d'au moins un passage (22) à travers le tiroir peuvent être appuyées contre des surfaces d'appui (24) situées du côté du corps de la soupape par un moyen de pression fluide (25), caractérisée en ce que le tiroir de soupape (7) comprend deux éléments de tiroir (26, 27) en forme de plaques, disposés l'un près de l'autre à une distance pouvant être modifiée perpendiculairement au sens de déplacement (21) du tiroir de soupape (7), sur chacun desquels est prévue l'une des deux faces de tiroir (12, 13) orientées du côté des embouchures et en même temps les surfaces de glissement orientées du côté du tiroir de soupape et pouvant être appuyées sur les surfaces d'appui (24), et en ce qu'entre les deux éléments de tiroir (26, 27) en forme de plaques il est prévu un dispositif d'étanchéité élastique (28) qui délimite dans la région comprise entre les éléments de tiroir (26, 27) un espace pour le fluide (29) pouvant être exposé au moyen de pression fluide (25) et qui se trouve en contact étanche avec les deux éléments de tiroir (26, 27) en même temps, quelle que soit la distance séparant à un moment donné les deux éléments de tiroir (26, 27).

2. Soupape selon la revendication 1, caractérisée en ce que le moyen de pression fluide (25) peut être amené quelle que soit la position du tiroir.

3. Soupape selon la revendication 1 ou 2, caractérisée en ce que le moyen de pression fluide (25) est dérivé du fluide de travail de la soupape, de préférence de manière continue et telle que l'intensité de la pression soit variable en fonction de la pression du fluide de travail.

4. Soupape selon l'une des revendications 1 à 3, caractérisée en ce que le dispositif d'étanchéité (28) se compose de joints à lèvres, qui présentent une section en forme de U ou de V, l'ouverture du U ou du V étant orientée vers l'espace pour le fluide (29).

5. Soupape selon l'une des revendications 1 à 3, caractérisée en ce que le dispositif d'étanchéité (28) comprend pour chaque passage (22) à travers le tiroir un élément d'étanchéité intérieur (30) entourant celui-ci et en outre un élément d'étanchéité extérieur (31) entourant tous les éléments d'étanchéité intérieurs (30), fermé sur lui-même et disposé de manière préférentielle dans la région marginale du tiroir, l'espace pour le fluide (29) qui peut être exposé au moyen de pression fluide (25) étant enfermé entre les éléments d'étanchéité intérieurs (30) et l'élément d'étanchéité extérieur (31).

6. Soupape selon l'une des revendications 1 à 5, caractérisée en ce que dans la liaison entre un canal de soupape (10) acheminant un fluide de travail et l'espace pour le fluide (29) du tiroir de soupape (7) est intercalé un dispositif formant soupape anti-retour (33) ouvert en direction de cet espace et obturé en sens inverse.

7. Soupape selon la revendication 6, caractérisée en ce que le dispositif formant soupape anti-retour (33) est formé d'au moins un élément d'étanchéité (30, 31) du dispositif d'étanchéité (28) pourvu d'une fonction anti-retour fluidique, à l'effet de quoi cet élément d'étanchéité (30, 31) est en particulier réalisé comme un joint à lèvres, qui possède au moins une lèvre d'étanchéité anti-retour (33).

8. Soupape selon la revendication 6 ou 7, caractérisée en ce qu'il est prévu un dispositif de déblocage (57) pour le dispositif formant soupape anti-retour (33), qui ventile au moins temporairement l'espace pour le fluide (29) lors du changement de position de la soupape.

9. Soupape selon la revendication 8, avec au moins un piston d'actionnement (9) prévu pour le déplacement de réglage du tiroir de soupape (7), caractérisée en ce que le dispositif de déblocage (57) présente un poussoir d'actionnement (58) faisant saillie à partir d'une face axiale du tiroir dans le sens de déplacement (21) dans la région comprise entre les éléments de tiroir (26, 27), qui peut être appuyé par le piston d'actionnement se déplaçant en direction du tiroir de soupape (7) contre le dispositif d'étanchéité (28), afin de supprimer provisoirement le contact étanche avec au moins un élément du tiroir.

10. Soupape selon l'une des revendications 1 à 9, caractérisée en ce que les deux éléments de tiroir (26, 27) sont posés l'un sur l'autre sans serrage, avec interposition du dispositif d'étanchéité (28).

11. Soupape selon l'une des revendications 1 à 10, caractérisée en ce que les deux éléments de tiroir (26, 27) sont fixés au moyen du dispositif d'étanchéité (28) pour empêcher un mouvement de déplacement relatif dans leur plan de joint, par le fait que le dispositif d'étanchéité (28) est saisi par l'arrière par des saillies des deux éléments de tiroir (26, 27).

12. Soupape selon l'une des revendications 1 à 11, caractérisée en ce que le tiroir de soupape (7) possède une forme plate en forme de plaque ou de bande et présente plusieurs passages (22) à travers le tiroir disposés à la suite les uns des autres dans le sens de déplacement (21) et perpendiculaires à son plan médian principal.

13. Soupape selon l'une des revendications 1 à 11 dans laquelle, en vue du déplacement du tiroir il est prévu dans la région d'au moins une face de tiroir un cylindre d'actionnement (36) avec un piston d'actionnement (37), caractérisée en ce que sur le côté du piston d'actionnement (37), en particulier sans joint, orienté vers le tiroir de soupape (7) ou sur la partie du cylindre opposée à ce côté et formée, en particulier, par le corps de soupape (1) il est prévu une saillie annulaire (45) axiale et l'autre élément (1, 37) présente un joint annulaire d'étanchéité (46), en particulier élastique, opposé dans le sens axial à la saillie annulaire (45), la saillie annulaire (45) étant appuyée contre et, en particulier, dans le joint d'étanchéité (46) dans l'une des positions finales du piston. (Figure 1)

14. Soupape selon l'une des revendications 1 à 13 dans laquelle, en vue du déplacement du tiroir il est prévu dans la région de chacune des deux faces de tiroir un cylindre d'actionnement (36) avec un piston d'actionnement (37), caractérisée en ce qu'entre la périphérie extérieure du piston d'actionnement (37) et la périphérie intérieure de la partie de guidage (38) du cylindre (36) se trouve une douille de glissement (67) pouvant coulisser relativement dans le sens axial aussi bien par rapport à la partie de guidage (38) que par rapport au piston (37), et dans laquelle des entraîneurs (68, 68′) limitant le déplacement relatif axial entre le piston (37) et la douille de glissement (67) sont disposés sur la douille de glissement (67) dans le sens axial des deux côtés du piston d'actionnement (37), de telle sorte que pour des propriétés identiques des surfaces d'appui des deux dispositifs d'actionnement (9, 9′) avec une sollicitation en pression identique et simultanée des deux chambres de cylindre (41) opposés au tiroir il s'établisse une position médiane définie du tiroir, dans laquelle les deux douilles de glissement (67) coopèrent avec les entraîneurs (68) opposés l'un à l'autre contre le piston (37) correspondant.

15. Soupape selon l'une des revendications 1 à 14, caractérisée en ce qu'au moins un passage (22) à travers le tiroir est franchi par une barrette de raidissement (52).

16. Soupape selon l'une des revendications 1 à 15, dans laquelle il est prévu en vue du déplacement du tiroir dans la région de chacune des deux faces de tiroir un cylindre d'actionnement (36) avec un piston d'actionnement (37), caractérisée en ce que les deux chambres de cylindre intérieurs (47) orientées l'une vers l'autre communiquent entre elles par un canal de fuite du corps (48), qui de préférence entoure le logement de tiroir (6) dans la région d'une zone de joint du corps (2) et peut recevoir le fluide de fuite qui s'échappe du logement de tiroir (6), et qui communique en outre de manière préférentielle avec une ouverture d'évacuation des fuites (49) du corps de soupape (1).

17. Soupape selon l'une des revendications 1 à 16, caractérisée en ce que le corps de soupape (1) est divisé longitudinalement, en particulier en deux moitiés, dans la région du logement de tiroir (6) et se compose de deux parties de corps (3, 4) opposées dans la région d'une zone de joint (2) et correspondant chacune à l'un des éléments de tiroir (26, 27).
